# EUROPÄISCHE PATENTSCHRIFT

(11) **EP 3 507 508 B1**
(45) Veröffentlichungstag und Bekanntmachung des Hinweises auf die Patenterteilung: **25.03.2020**
(21) Anmeldenummer: 18803386.4
(22) Anmeldetag: 12.11.2018
(51) Int. Cl.: F16B 5/10, F16B 5/06, F16B 2/12, F16B 21/04

(54) **DREHVERSCHLUSS ZUR VERBINDUNG VON BAUTEILEN**
ROTARY CLOSURE FOR CONNECTING COMPONENTS
RACCORD VISSÉ SERVANT AU RACCORDEMENT DE PIÈCES

(30) Priorität: 23.11.2017 DE 102017127682
(43) Veröffentlichungstag der Anmeldung: 10.07.2019
(73) Patentinhaber: Seifert Systems Ltd., 3000 Birzebbuga (MT)
(72) Erfinder: SEIFERT, Michael Rudi, SWQ 1015 Madliena (MT); ZAMMIT, Glenn, SWQ 2062 Ibragg (MT)
(74) Vertreter: Kruspig, Volkmar
(86) Internationale Anmeldenummer: PCT/EP2018/080855
(87) Internationale Veröffentlichungsnummer: WO 2019/101550

(56) Entgegenhaltungen:
- DE-A1- 3 610 868
- US-A1- 2007 122 254
- US-A1- 2015 104 247

## Beschreibung

Die Erfindung betrifft einen Drehverschluss zur Verbindung von Bauteilen, bestehend aus einem Bolzen mit Verriegelungsquerfortsatz, einer zylindrischen Aufnahme für den Bolzen, Führungsmitteln zwischen Bolzen und Aufnahme, wobei die Führungsmittel mindestens eine Nase am Bolzen sowie nutenförmige Vertiefungen in der Aufnahme umfassen, derart, dass der Bolzen bei Bewegung in Richtung zwischen Ausgangsstellung und Verriegelungsstellung eine federkraftunterstützte axiale Längsbewegung ausführt, wobei die diesbezügliche Feder bei Bewegung des Bolzens in umgekehrter Richtung gespannt wird und die Feder im Inneren der Aufnahme angeordnet ist sowie sich an einem innenwandseitigen Vorsprung abstützt gemäß Oberbegriff des Anspruches 1.

Aus dem deutschen Gebrauchsmuster DE 7 907 877 U1 ist ein Drehverschluss für schwenkbar gelagerte Platten bekannt. Dieser Verschluss besteht aus einem in der Trägerplatte drehbar gelagerten Verschlusshebel sowie von der Rückseite der Trägerplatte her betätigbaren Ansatzflächen im Lagerbereich zur Übertragung von einer Drehkraft auf den Verschlusshebel. Der Verschlusshebel ist in der Lagerstelle der Trägerplatte durch einen elastisch einrastbaren Kunststoff-Schnappverschluss axial festlegbar.

Bei der Betätigung des Verschlusses von einer Freigabeposition in eine Arretierposition oder Arretierstellung ist der Einsatz eines Werkstückes erforderlich, um die notwendige Verschwenkung des Hebels auszuführen. Eine Einhandbedienung beim Verriegeln von entsprechenden Bauteilen kann daher nicht erfolgen.

Bei der Vorrichtung zum lösbaren Befestigen von Bauteilen gemäß DE 196 01 919 C2 soll diese als loses Element zur Festlegung von mit Durchgangsöffnungen versehenen Bauteilen Verwendung finden. Dabei soll weiterhin die Möglichkeit bestehen, die Vorrichtung von den Bauteilen wieder entfernen zu können. Die Vorrichtung selbst geht von einem Abstützelement aus und einem im Abstützelement drehbar und axial verschiebbar aufgenommenen, durch das Abstützelement koaxial hindurchgeführten Verriegelungsglied in Form eines Drehzapfens. Der Drehzapfen weist am Ende eine radial abstehende Verriegelungsnase auf, deren Radialabmessung so festgelegt ist, dass sie in mindestens einer ersten Drehstellung des Drehzapfens keine Überdeckung mit dem zweiten Bauteil hat und in mindestens einer zweiten Drehstellung des Drehzapfens das zweite Bauteil rückseitig überdeckt und daran infolge des Axialzugs am Drehzapfen anschlägt. Ein Betätigungselement gemäß DE 196 01 919 C2 ist als Spannhebel ausgebildet, wobei einerseits mit Hilfe des Spannhebels die Verriegelungsnase bewegt und andererseits unter Nutzung eines Kniehebelprinzips in der Endlage des Spannhebels die notwendige Flächenpressung zum Fixieren der Bauteile aufbringbar ist.

Bei dieser Lösung des Standes der Technik kann zwar werkzeugfrei die notwendige Verbindung zwischen den Bauteilen bewerkstelligt werden, jedoch ist eine recht umständliche Handhabung unter Nutzung des Schwenkhebels erforderlich, so dass eine intuitive Betätigung nahezu unmöglich ist.

Bei der gattungsbildenden DE 36 10 868 A1 ist ein Drehverschluss zum Verbinden plattenförmiger Bauteile gezeigt.

Der Drehverschluss besteht aus einem mit einem Querteil versehenen Bolzen, der durch die Bauteile hindurchtritt, sowie einem Federglied und einer Aufnahme, wobei der Bolzen und die Aufnahme mit zusammenwirkenden Führungsmitteln ausgestattet sind, durch die der Bolzen aus einer Ausgangsstellung in eine Verriegelungsstellung geführt und in dieser gehalten wird, in welche er die Bauteile aufeinanderpresst.

Die Führungsmittel bestehen aus mindestens einem Vorsprung und derart geformten nutenförmigen Vertiefungen, dass der Bolzen bei Bewegungen in beide Richtungen zwischen der Ausgangsstellung und der Verriegelungsstellung eine axiale Längsbewegung entgegen einer Federkraft des Federgliedes, eine anschließende Drehbewegung und eine daran anschließende Längsbewegung in Richtung der Federkraft des Federgliedes ausführt.

Die Aufnahme des Drehverschlusses hat eine als Flansch ausgebildete Grundfläche, beispielsweise in Form eines an den Ecken abgerundeten Parallelogramms, in dessen Mitte ein senkrecht zur Grundfläche angeordnetes Rohrstück fest angebracht ist, das in seiner Längserstreckung wesentlich kürzer als der erwähnte Bolzen ist. In der Mitte der Grundfläche der Aufnahme befindet sich eine Bohrung, deren Bohrungsachse mit der Rohrachse des Rohrstückes zusammenfällt. Der Durchmesser der Bohrung ist dabei kleiner als der Innendurchmesser des Rohrstückes. Der größere Durchmesser des Rohrstückes gegenüber der Bohrung erlaubt die Aufnahme der auf den Bolzen gesteckten Schraubenfeder, die sich auf der einen Seite in der Aufnahme und auf der anderen im Kopf abstützt. In der Bohrung befinden sich zwei diametral gegenüberliegende Vorsprünge, die in die Vertiefungen des Bolzens eingreifen und so den Bolzen während des Öffnungs- bzw. Schließvorganges führen.

Bei dem Erreichen der Verriegelungsposition kann der Bolzen zurückfedern, wodurch sich das Querteil quer zur diametral erweiterten Bohrung erstreckt und somit die zu verbindenden plattenförmigen Teile zusammenpresst.

Dieser Lösung des Standes der Technik wohnt der Vorteil inne, dass durch die Nuten in Verbindung mit den Fortsätzen die Möglichkeit besteht, eine Axialbewegung in eine Drehbewegung umzuwandeln, so dass die Handhabung eines derartigen Drehverschlusses zum Befestigen von Bauteilen vereinfacht ist. Die Kraft zum Fixieren der Bauteile wird jedoch maßgeblich von der Federkraft bestimmt, wobei diesbezüglich auch die Dicke der zu verbindenden Bauteile und das sich hierdurch ergebende Maß der Vorspannung der Feder bedeutsam ist. Es hat sich gezeigt, dass unter bestimmten Umständen die Kräfte zum Fixieren der Bauteile unter Nutzung eines derart vorbekannten Drehverschlusses nicht ausreichen, insbesondere dann, wenn die Bauteile Erschütterungen ausgesetzt sind oder einer Temperaturwechselbelastung unterliegen.

Aus dem Vorgenannten ist es daher Aufgabe der Erfindung, einen weiterentwickelten Drehverschluss zur Verbindung von Bauteilen, bestehend aus einem Bolzen mit Verriegelungsfortsatz, einer zylindrischen Aufnahme für den Bolzen sowie Führungsmitteln zwischen Bolzen und Aufnahme anzugeben, welcher zum einen leicht und intuitiv handhabbar ist, welcher universell eingesetzt werden kann und der die Möglichkeit aufweist, zusätzlich, insbesondere nach dem Erreichen einer Verbindungsposition zwischen den Bauteilen noch eine zusätzliche kraftschlüssige Verbindung ohne weitere externe Mittel herzustellen.

Die Lösung der Aufgabe der Erfindung erfolgt mit einem Drehverschluss gemäß der Merkmalskombination nach Patentanspruch 1, wobei die Unteransprüche mindestens zweckmäßige Ausgestaltungen und Weiterbildungen darstellen.

Es wird demnach von einem Drehverschluss zur Verbindung von Bauteilen ausgegangen.

Hierbei kann es sich beispielsweise um ein Klimatisierungsaggregat handeln, das an einer Aussparung eines Schaltschrankes zu montieren ist, um die gewünschte Klimatisierung des Schaltschrankinneren zu bewerkstelligen. Dabei musste das Klimagerät, welches üblicherweise eine nicht unerhebliche Masse aufweist, zunächst in die Nähe der Aussparung im Schaltschrank bewegt und dort positioniert werden, um im Anschluss das Klimagerät an der Schaltschrankaussparung zu befestigen. Um diesen Befestigungsvorgang zu erleichtern und ein schnelles Vorab-Fixieren des Klimagerätes am Schaltschrank zu erreichen, findet der erfindungsgemäße Drehverschluss bevorzugte Anwendung, ohne dass selbstverständlich die Nutzung des Drehverschlusses zur Verbindung völlig andersartiger Bauteile ausgeschlossen ist.

Der Drehverschluss besteht aus einem Bolzen mit einem Verriegelungsfortsatz, einer zylindrischen Aufnahme für den Bolzen derart, dass der Bolzen in der zylindrischen Aufnahme über ein gewisses Maß längsverschieblich und drehbeweglich gelagert ist.

Weiterhin sind Führungsmittel zwischen den Bolzen und der Aufnahme vorhanden, wobei die Führungsmittel zumindestens eine Nase oder einen Fortsatz am Bolzen sowie nutenförmige Vertiefungen in der Aufnahme umfassen, derart, dass der Bolzen bei Bewegung in Richtung zwischen Ausgangsstellung und Verriegelungsstellung eine federkraftunterstützte axiale Längsbewegung ausführt, wobei die diesbezügliche Feder bei Bewegung des Bolzens in umgekehrte Richtung gespannt wird. Die Feder selbst ist bevorzugt im Inneren der Aufnahme angeordnet und stützt sich dort an einem innenwandseitigen Vorsprung ab.

Wird beispielsweise bei der vorstehend erläuterten Montage eines Klimagerätes in bzw. an der Ausnehmung eines Schaltschrankes das Klimagerät mit zwei hakenartigen Befestigungselementen zunächst an der Unterkante der Aussparung angesetzt und dann in Richtung Schaltschrank bewegt, kommen die am Klimagerät befestigten Drehverschlüsse in Kontakt mit der Außenseite der Schaltschrankwandung. Hierdurch entsteht eine Druckkraft, die auf den Bolzen einwirkt. Infolge der nutenförmigen Vertiefungen in Wechselwirkung mit den Nasen verschwenkt sich der Bolzen nebst seinem Verriegelungsquerfortsatz selbsttätig. Nachdem nun durch weiteres Anwinkeln des Klimagerätes in Richtung Schaltschrankgehäuse und dortiger Aussparung der Verriegelungsquerfortsatz in die Aussparung eindringen kann und keinem Widerstand mehr unterliegt, springt der Verriegelungsquerfortsatz zurück in seine Ausgangslage und kommt mit einer Oberflächenseite in Anlage mit der Innenwandung im Bereich der Aussparung des Schaltschrankgehäuses. Hierdurch ist das Klimagerät bereits am Schaltschrank gesichert.

Erfindungsgemäß weist der Bolzen eine axial verlaufende Durchgangsöffnung auf, wobei die Durchgangsöffnung in der Lage ist, eine Schraube, einen Gewindestift oder dergleichen Mittel aufzunehmen, wobei ein erstes Ende der Schraube oder des Gewindestiftes in ein Gegengewinde innerhalb der Aufnahme eingreift.

Ein zweites Ende der Schraube oder des Gewindestiftes gelangt in Anlage mit einer Stirnseite des Bolzens oder eines Abschnittes des Verriegelungsquerfortsatzes, so dass in der Verriegelungsstellung durch Betätigen der Schraube eine zusätzliche Kraft auf die verbindenden Bauteile aufbringbar ist.

Ist nun wie voranstehend geschildert, das beispielhafte Klimagerät in der Aussparung in einem Schaltschrankgehäuse bereits fixiert, kann der Monteur durch Betätigung der Schraube die sichere Endlage des Klimagerätes und damit eine sichere Fixierung desselben am Schaltschrank herstellen. Dabei ist es nicht erforderlich, ein Gegenhalten oder ein Abstützen des Klimagerätes vorzunehmen.

In Weiterbildung der Erfindung ist das zweite Ende der Schraube bevorzugt als Schraubenkopf mit Mitteln zur Aufnahme eines Werkzeuges ausgebildet. Hier kann es sich um einen Schlitzschraubenkopf, einen Kreuzschlitzschraubenkopf oder aber auch um einen Innenvielkantkopf handeln.

Die bereits erwähnten nutenförmigen Vertiefungen sind derart als Steuerkurven ausgebildet, dass bei Ausübung einer axialen Druckkraft auf den Bolzen entgegen der Kraft der Feder ein Verschwenken des Verriegelungsquerfortsatzes die Folge ist.

Weiterhin sind die Steuerkurven so ausgeführt, dass beim Erreichen einer vorgegebenen Verschwenkbewegungsposition respektive einem entsprechenden Verschwenkungswinkel und Fortfall der Druckkraft eine Rückverschwenkbewegung des Verriegelungsfortsatzes mit Bolzen eintritt.

Die Aufnahme weist in einer Weiterbildung der Erfindung an ihrem zum Verriegelungsquerfortsatz weisenden Ende einen Befestigungsflansch mit mindestens einer Befestigungsbohrung auf. Damit kann der Drehverschluss am beispielhaft erwähnten Klimagerät bei dessen Herstellung befestigt werden.

In einer Weiterbildung der Erfindung weist der Befestigungsflansch eine Vertiefung zur versenkten Aufnahme mindestens eines Teiles des Verriegelungsquerfortsatzes auf.

Bei Auslieferung ist dabei eine Position zwischen Verriegelungsquerfortsatz und der Aufnahme gewählt, die sicherstellt, dass der Verriegelungsquerfortsatz innerhalb der Vertiefung befindlich und dort aufgenommen ist, so dass eine Beschädigung des Drehverschlusses wirksam verhindert werden kann.

In Weiterbildung der Erfindung kann der Verriegelungsquerfortsatz konisch ausgebildet sein oder ein- oder beidseitig eine Anlaufschräge oder eine Anlaufkurve aufweisen.

Dies ist insbesondere dann von Vorteil, wenn der Verriegelungsquerfortsatz in eine ihm zugeordnete Klemmvorrichtung eingreift oder Toleranzen bei der Materialstärke im Bereich der zu verbindenden Bauteile gegeben sind.

Federabseitig des Vorsprunges kann bei einer Weiterbildung der Erfindung in der Aufnahme diese im Inneren eine Kontur aufweisen, welche der verdrehsicheren Aufnahme einer Gewindemutter dient, welche das Gegengewinde für das zweite Ende der Schraube oder des Gewindestiftes bildet.

Die Erfindung soll nachstehend anhand eines Ausführungsbeispieles sowie unter Zuhilfenahme von Figuren näher erläutert werden.

Hierbei zeigen:
- Fig. 1: verschiedene Ansichten und perspektivische Darstellungen der zylindrischen Aufnahme mit Befestigungsflansch sowie erkennbaren Steuerkurven;
- Fig. 2a und 2b: verschiedene Ausführungsformen des Bolzens mit Verriegelungsquerfortsatz in jeweils verschiedenen Ansichten und perspektivischer Darstellung;
- Fig. 3a und 3b: verschiedene perspektivische Ansichten des kompletten Drehverschlusses mit Bolzen, Verriegelungsquerfortsatz und Aufnahme in einer Position, bei der sich der Verriegelungsquerfortsatz in einer Vertiefung innerhalb des Befestigungsflansches befindet; und
- Fig. 3c: eine Explosivdarstellung des Drehverschlusses gemäß den Figuren 3a und 3b mit erkennbaren Einzelteilen einschließlich den Mitteln zum Aufbringen einer zusätzlichen Verriegelungskraft auf der Basis einer integrierten Schrauben/Mutter-Anordnung.

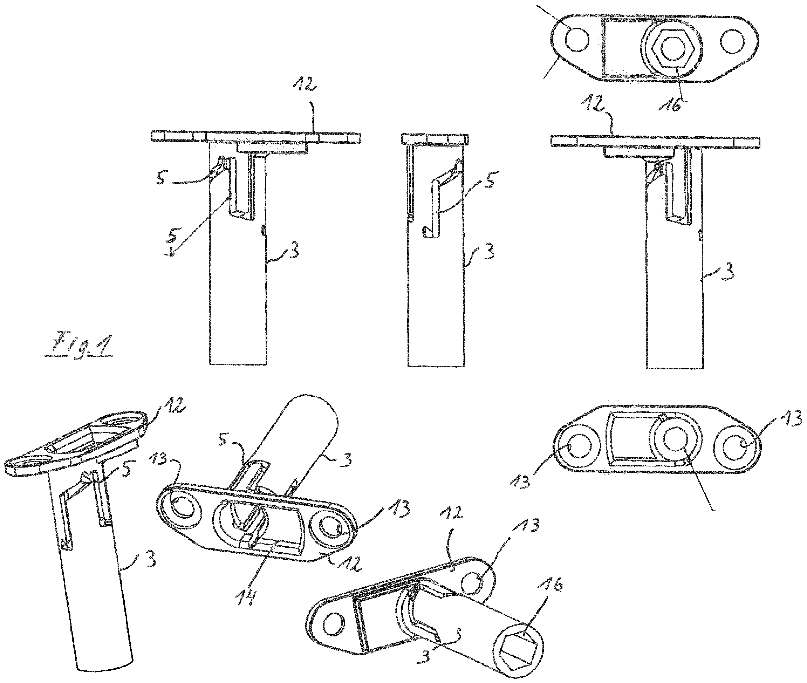

Gemäß den Abbildungen nach Fig. 1 ist ein wesentliches Bauteil des erfindungsgemäßen Drehverschlusses eine hohlzylindrische Aufnahme 3, welche an ihrem einen, insbesondere oberen Ende einen Befestigungsflansch 12 besitzt.

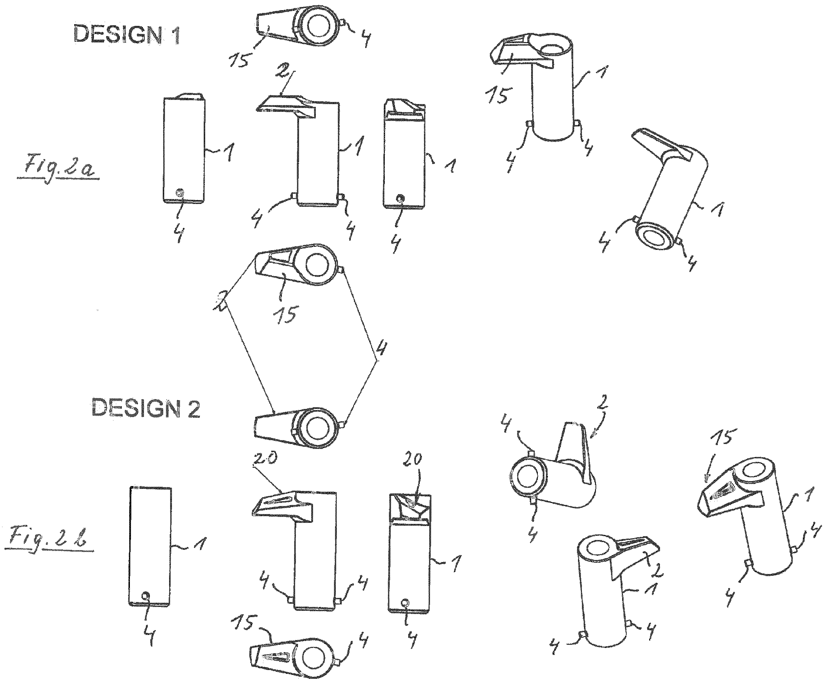

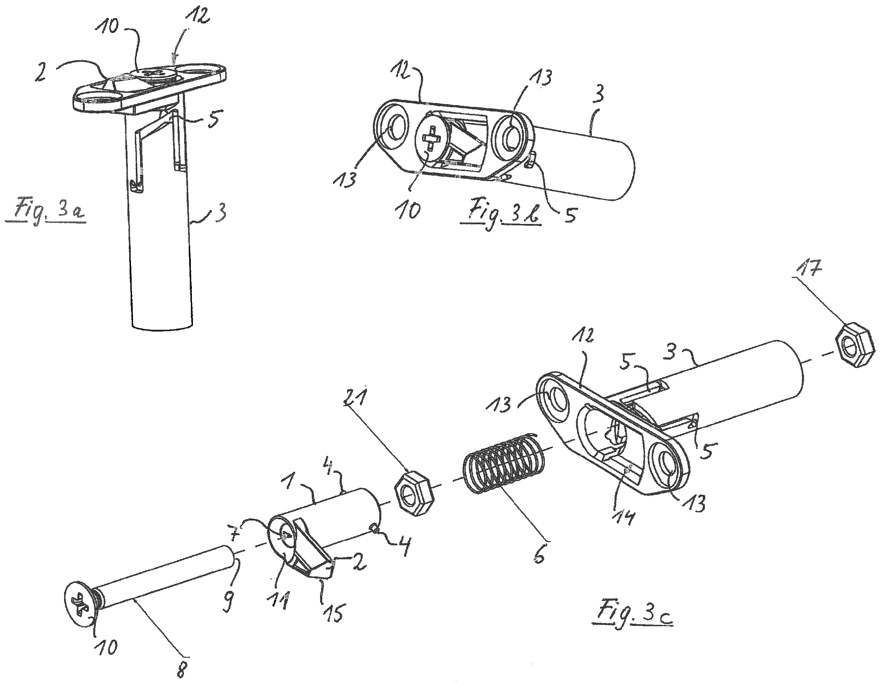

Im Befestigungsflansch 12 ist eine Vertiefung 14 eingebracht bzw. eingeformt, die der Aufnahme eines Verriegelungsquerfortsatzes 2 (siehe Figur 2a, 2b sowie 3a-c) dient.

In einem umfangseitigen Abschnitt, im gezeigten Beispiel nahe des Befestigungsflansches 2 sind nutenförmige Vertiefungen 5 als Steuerkurven ausgebildet, um bei Ausübung einer axialen Druckkraft auf den in der Fig. 1 nicht gezeigten Bolzen 1 ein Verschwenken des Verriegelungsquerfortsatzes zu bewirken.

In der Aufnahme 3 kann eine Kontur 16 vorhanden sein, die der verdrehsicheren Aufnahme einer Gewindemutter 17 (siehe Fig. 3c) dient.

Die Figuren 2a und 2b zeigen eine erste und eine zweite Ausführungsform des erfindungsgemäßen Bolzens, der vom hohlzylindrischen Inneren der Aufnahme 3 geführt aufgenommen wird.

Am Bolzen 1 sind Nasen 4 angeformt oder vorgesehen, wobei die Nasen 4 mit den nutenförmigen Vertiefungen 5 in der Aufnahme 3 wechselwirken und die vorerwähnten Steuerkurven-Bewegungen ermöglichen.

Der Verriegelungsquerfortsatz 2 kann ein- oder beidseitig Anlaufschrägen 15 oder eine Anlaufkurve 20 besitzen.

Der Verriegelungsquerfortsatz stellt quasi einen Finger dar, der selbst eine konische Form besitzen kann, wie dies aus den insbesondere perspektivischen Darstellungen nach den Figuren 2a und 2b für den Fachmann nachvollziehbar ist.

Der komplette Drehversschluss wie mit Hilfe der Figuren 3a bis 3c dargestellt und illustriert besteht also aus einem Bolzen 1 mit Verriegelungsquerfortsatz 2, einer zylindrischen Aufnahme 3 für den Bolzen 1, Führungsmitteln zwischen Bolzen 1 und Aufnahme 3, wobei die Führungsmittel eine Nase 4 am Bolzen 1 sowie nutenförmige Vertiefungen 5 in der Aufnahme 3 umfassen.

Hierdurch führt der Bolzen 1 bei Bewegung in Richtung zwischen Ausgangsstellung und Verriegelungsstellung eine federkraftunterstützte axiale Längsbewegung aus.

Hierfür ist eine Feder 6 vorgesehen, die bei Bewegung des Bolzens in umgekehrte Richtung gespannt wird.

Die Feder 6 befindet sich im Inneren der Aufnahme 3 und stützt sich an einem in den Figuren nicht gezeigten Vorsprung innenwandseitig der Aufnahme ab.

Der Bolzen 1 wiederum besitzt eine axial verlaufende Durchgangsöffnung 7.

Die Durchgangsöffnung 7 ist in der Lage eine Schraube 8, einen Gewindestift oder ein ähnliches Mittel aufzunehmen, wobei ein erstes Ende 9 der Schraube 8 oder eines Gewindestiftes in ein Gegengewinde innerhalb der Aufnahme 3 eingreift.

Ein zweites Ende 10 der Schraube 8 kommt in Anlage mit einer Stirnseite 11 des Bolzens oder einem Abschnitt des Verriegelungsquerfortsatzes 12.

In der Verriegelungsstellung kann mit Hilfe der Schraube 8 eine zusätzliche Kraft auf die in der Figur nicht gezeigten, zu verbindenden Bauteile aufgebracht und damit eine sichere Verbindung erreicht werden.

Die Gewindemutter 17, die in der Ausnehmung 16 befindlich ist, dient als Gegengewinde für das erste Ende 9 der Schraube 8.

Die in der Fig. 3c noch gezeigte weitere Mutter 21 dient der Sicherung der Baugruppe gegen Auseinanderfallen. Ein Einsatz der Mutter 21 ist nicht zwingend, sondern lediglich optional vorgesehen.

## Patentansprüche

1. Drehverschluss zur Verbindung von Bauteilen, bestehend aus einem Bolzen (1) mit Verriegelungsquerfortsatz (2), einer zylindrischen Aufnahme (3) für den Bolzen (1), Führungsmitteln zwischen Bolzen (1) und Aufnahme (3), wobei die Führungsmittel mindestens eine Nase (4) am Bolzen (1) sowie nutenförmige Vertiefungen (5) in der Aufnahme (3) umfassen, derart, dass der Bolzen (1) bei Bewegung in Richtung zwischen Ausgangsstellung und Verriegelungsstellung eine federkraftunterstützte axiale Längsbewegung ausführt, wobei die diesbezügliche Feder (6) bei Bewegung des Bolzens (1) in umgekehrte Richtung gespannt wird und die Feder (6) im Inneren der Aufnahme (3) angeordnet ist und sich an einem innenwandseitigen Vorsprung abstützt,
**dadurch gekennzeichnet, dass**
der Bolzen (1) eine axial verlaufende Durchgangsöffnung (7) aufweist,
die Durchgangsöffnung (7) eine Schraube (8) oder einen Gewindestift aufnimmt, wobei ein erstes Ende (9) der Schraube (8) oder des Gewindestiftes in ein Gegengewinde innerhalb der Aufnahme (3) eingreift und ein zweites Ende (10) der Schraube (8) oder des Gewindestiftes in Anlage mit einer Stirnseite (11) des Bolzens (1) oder eines Abschnitts
des Verriegelungsquerfortsatzes (2) gelangt, so dass in der Verriegelungsstellung eine zusätzliche Kraft auf die zu verbindenden Bauteile aufbringbar ist.

2. Drehverschluss nach Anspruch 1,
**dadurch gekennzeichnet, dass**
das zweite Ende (10) der Schraube (8) als Schraubenkopf mit Mitteln zum Ansetzen eines Werkzeuges ausgebildet ist.

3. Drehverschluss nach Anspruch 1 oder 2,
**dadurch gekennzeichnet, dass**
die nutenförmigen Vertiefungen (5) derart als Steuerkurven ausgebildet sind, dass bei Ausübung einer axialen Druckkraft auf den Bolzen (1) entgegen der Kraft der Feder (6) ein Verschwenken des Verriegelungsquerfortsatzes (2) die Folge ist.

4. Drehverschluss nach Anspruch 3,
**dadurch gekennzeichnet, dass**
die Steuerkurven so ausgebildet sind, dass beim Erreichen einer vorgegebenen Verschwenkbewegungsposition und Fortfall der Druckkraft eine Rückverschwenkbewegung die Folge ist.

5. Drehverschluss nach einem der vorangegangenen Ansprüche,
**dadurch gekennzeichnet, dass**
die Aufnahme (3) an ihrem zum Verriegelungsquerfortsatz (2) weisenden Ende einen Befestigungsflansch (12) mit mindestens einer Befestigungsbohrung (13) aufweist.

6. Drehverschluss nach Anspruch 5,
**dadurch gekennzeichnet, dass**
der Befestigungsflansch (12) eine Vertiefung (14) zur versenkten Aufnahme mindestens eines Teiles des Verriegelungsquerfortsatzes (2) aufweist.

7. Drehverschluss nach einem der vorangegangenen Ansprüche,
**dadurch gekennzeichnet, dass**
der Verriegelungsquerfortsatz (2) ein- oder beidseitig eine Anlaufschräge (15) oder Anlaufkurve (20) aufweist.

8. Drehverschluss nach einem der vorangegangenen Ansprüche,
**dadurch gekennzeichnet, dass**
federabseitig des Vorsprunges in der Aufnahme (3) diese im Inneren eine Kontur (16) aufweist, welche der verdrehsicheren Aufnahme einer Gewindemutter (17) dient, welche das Gegengewinde für das erste Ende (9) der Schraube (8) bildet.

## Claims

1. A rotary closure for connecting components, composed of a bolt (1) having a locking cross protrusion (2), a cylindrical accommodation (3) for the bolt (1), guiding means between the bolt (1) and the accommodation (3), wherein the guiding means comprise at least one nose (4) on the bolt (1), and groove-shaped recesses (5) in the accommodation (3) such that the bolt (1), when being moved in the direction between the initial position and the locking position, performs a spring force-assisted axial longitudinal movement, wherein the respective spring (6) is tensioned, when the bolt (1) is moved in the reverse direction, and the spring (6) is arranged inside the accommodation (3) and supports against an inner wall side projection,
**characterized in that**
the bolt (1) has an axially extending passage opening (7), the passage opening (7) receives a screw (8) or a threaded pin, wherein a first end (9) of the screw (8) or of the threaded pin engages into a counter thread within the accommodation (3), and a second end (10) of the screw (8) or of the threaded pin comes to rest against a front side (11) of the bolt (1) or a portion of the locking cross protrusion (2) so that, in the locking position, an additional force is applicable upon the components to be connected.

2. The rotary closure according to claim 1,
**characterized in that**
the second end (10) of the screw (8) is formed as a screw head having means for attaching a tool.

3. The rotary closure according to claim 1 or 2,
**characterized in that**
the groove-shaped recesses (5) are configured to be control cams such that, when an axial compression force is exerted upon the bolt (1) against the force of the spring (6), the result is the locking cross protrusion (2) pivoting.

4. The rotary closure according to claim 3,
**characterized in that**
the control cams are formed so as to result in a return pivoting movement when a predefined pivoting movement position is reached and the compression force is eliminated.

5. The rotary closure according to any one of the preceding claims,
**characterized in that**,
at its end pointing toward the locking cross protrusion (2), the accommodation (3) includes a fastening flange (12) having at least one fastening bore (13).

6. The rotary closure according to claim 5,
**characterized in that**
the fastening flange (12) includes a depression (14) for the countersunk reception of at least a part of the locking cross protrusion (2).

7. The rotary closure according to any one of the preceding claims,
**characterized in that**
the locking cross protrusion (2) has a starting slope (15) or starting curve (20) on one or both sides.

8. The rotary closure according to any one of the preceding claims,
**characterized in that**
remote from the spring of the projection in the accommodation (3), the accommodation (3) has a contour (16) in the interior, which serves to receive a threaded nut (17) in a manner protected against rotation, which forms the counter thread for the first end (9) of the screw (8).

## Revendications

1. Raccord rotatif pour l'assemblage de composants, constitué d'un goujon (1) ayant un appendice transversal de verrouillage (2), d'un logement cylindrique (3) pour le goujon (1), de moyens de guidage entre le goujon (1) et le logement (3), les moyens de guidage comprenant au moins un bec (4) sur le goujon (1) et des renfoncements (5) en forme de rainure dans le logement (3), de telle sorte que le goujon (1) effectue un mouvement longitudinal axial soutenu par la force d'un ressort lors de son mouvement dans la direction entre la position initiale et la position de verrouillage, le ressort correspondant (6) étant bandé lorsque le goujon (1) se déplace dans la direction opposée, et le ressort (6) étant disposé à l'intérieur du logement (3) et prenant appui contre une saillie côté paroi intérieure,
**caractérisé en ce que**
le goujon (1) présente une ouverture traversante (7) s'étendant axialement, l'ouverture traversante (7) reçoit une vis (8) ou une tige filetée, une première extrémité (9) de la vis (8) ou de la tige filetée s'engageant dans un taraudage complémentaire à l'intérieur du logement (3), et une deuxième extrémité (10) de la vis (8) ou de la tige filetée entrant en contact avec une face frontale (11) du goujon (1) ou avec une portion de l'appendice transversal de verrouillage (2), de sorte qu'en position de verrouillage, une force supplémentaire peut être appliquée aux composants à assembler.

2. Raccord rotatif selon la revendication 1,
**caractérisé en ce que**
la deuxième extrémité (10) de la vis (8) est conçue comme une tête de vis ayant des moyens d'application d'un outil.

3. Raccord rotatif selon la revendication 1 ou 2,
**caractérisé en ce que**
les renfoncements (5) en forme de rainure sont conçus sous forme de cames de commande de telle sorte que lorsqu'une force de pression axiale est exercée sur le goujon (1) à l'encontre de la force du ressort (6), il se produit un pivotement de l'appendice transversal de verrouillage (2).

4. Raccord rotatif selon la revendication 3,
**caractérisé en ce que**
les cames de commande sont conçues de telle manière que lorsqu'une position de pivotement prédéterminée est atteinte et que la force de pression cesse, il en résulte un mouvement de pivotement en retour.

5. Raccord rotatif selon l'une des revendications précédentes,
**caractérisé en ce que**
à son extrémité dirigée vers l'appendice transversal de verrouillage (2), le logement (3) comporte une bride de fixation (12) ayant au moins un perçage de fixation (13).

6. Raccord rotatif selon la revendication 5,
**caractérisé en ce que**
la bride de fixation (12) présente un renfoncement (14) pour recevoir en retrait au moins une partie de l'appendice transversal de verrouillage (2).

7. Raccord rotatif selon l'une des revendications précédentes,
**caractérisé en ce que**
l'appendice transversal de verrouillage (2) présente sur un côté ou sur deux côtés une rampe de montée (15) ou une courbe de montée (20).

8. Raccord rotatif selon l'une des revendications précédentes,
**caractérisé en ce que**
sur le côté de la saillie détourné du ressort, dans le logement (3), ce dernier présente à l'intérieur un contour (16) qui sert de logement anti-rotation d'un écrou taraudé (17) qui forme le taraudage complémentaire pour la première extrémité (9) de la vis (8).
